**Europäisches Patentamt**

**European Patent Office**

**Office européen des brevets**

(19)

(11) **EP 1 122 453 A1**

(12) **EUROPEAN PATENT APPLICATION**

(43) Date of publication:
**08.08.2001 Bulletin 2001/32**

(51) Int Cl.⁷: **F16D 55/22**

(21) Application number: **00830066.7**

(22) Date of filing: **31.01.2000**

(84) Designated Contracting States:
**AT BE CH CY DE DK ES FI FR GB GR IE IT LI LU
MC NL PT SE**
Designated Extension States:
**AL LT LV MK RO SI**

(71) Applicant: **Freni Brembo S.p.A.**
**24035 Curno, Bergamo (IT)**

(72) Inventors:
- **Ciotti, Alessandro**
 **24036 Ponte San Pietro - Bergamo (IT)**
- **Agostini, Johannes**
 **24035 Curno (Bergamo) (IT)**

(74) Representative: **Maccalli, Marco et al**
**Jacobacci & Perani S.p.A.**
**Via Senato, 8**
**20121 Milano (IT)**

(54) **Caliper body for disc brakes and corresponding method of fabrication**

(57) A one-piece calliper for disc brakes is produced by forming two separate half-callipers (3, 4) by diecasting, machining the two separate half-callipers to form the necessary mechanical details, and finally welding the two half-callipers together by suitable welding methods, such as electron beam welding, plasma welding, or friction welding with a rotating stirring element.

FIG. 4

## Description

The present invention relates to a calliper body for disc brakes and the corresponding method of production.

It is known that calliper bodies for disc brakes, regardless of whether they are of the fixed type, in other words those having opposing hydraulic pistons, or of the floating type, in other words those having pistons on only one arm of the calliper, consist of two separate half-callipers, which are locked together by means of screws or bolts which have to be positioned at the periphery of the disc, in order not to interfere with the disc.

The calliper body has to be made in the form of two separate half-callipers, formed by die-casting, because of the requirements of machining to produce housings which are dimensionally accurate, with limited tolerances, for the hydraulic pistons and their sealing members, as well as housings for the brake pads.

The connection of the two half-callipers by means of screws requires particularly precise, and therefore expensive, machining of the housings and of the threaded parts, and, obviously, of the contact surface of the two half-callipers.

Owing to the considerable stresses involved, as will be explained in greater detail subsequently, it is necessary to use connections of the screw or bolt type having large dimensions, to be housed in a yoke (also called a "bridge") of the calliper which is of considerable thickness. It is also necessary to provide a very large contact surface between the two half-callipers, to prevent the development of unacceptable unit stresses in the screws or in the bolts and in the material of the half-callipers.

This gives rise to a structure having considerable overall dimensions, with respect to the diameter of the brake disc, and a significant weight, even though, in most cases, light alloys or composite materials in a metal matrix are used to form the callipers; these are expensive materials which it is desirable to use sparingly.

A further disadvantage lies in the particular attention which has to be paid to the operation of tightening the screws or bolts, which must be carried out with precise control of the tightening torque and the stress imposed.

Moreover, in the case of brake callipers in which the ducts for the passage of the fluid between the two half-callipers are formed internally, it is necessary to make seats capable of housing seals in the surfaces of the yokes designed to come into contact with each other.

The problem upon which the present invention is based is that of devising a calliper body for disc brakes which has structural and functional characteristics such that the problems and disadvantages referred to above are overcome.

This problem is resolved by a calliper body for disc brakes according to Claim 1.

The one-piece calliper body makes it possible to provide a one-piece calliper for disc brakes, which has reduced overall dimensions, which reduces the quantity of material used and which reduces to a minimum the complexity and difficulties of assembly and the corresponding cost, but which is also reliable.

These results are achieved by means of a calliper comprising a body formed by welding the bodies of two half-callipers, the welding being carried out by modern methods of welding without the use of filler material, after the two half-callipers have been subjected to all the necessary machining operations which cannot be carried out when the calliper has been welded.

The characteristics and advantages of the invention, which relates both to the calliper itself and to the process for its production, will be made clearer by the following description provided with reference to the attached drawings in which:

- Figure 1 is a schematic view, in a section perpendicular to the plane of the brake disc, of a conventional calliper, consisting of two half-callipers, locked together by fastening screws;
- Figure 2 is a qualitative diagram of the stresses induced by a braking operation in the yoke of the calliper of Figure 1,
- Figure 3 is a front view of the side of a conventional half-calliper according to the prior art facing the disc brake,
- Figure 4 is a schematic view, in a section perpendicular to the plane of the brake disc, of a one-piece calliper made according to the present invention,
- Figure 5 is a qualitative diagram of the stresses induced by a braking operation in the yoke of the calliper of Figure 4,
- Figure 6 is a schematic view, in a section perpendicular to the plane of the brake disc, of a variant embodiment of the calliper of Figure 4,
- Figure 7 is a view, in a section parallel to the plane of the disc, of a calliper of the type shown schematically in Figure 6.

To enable the invention and its advantages to be understood more clearly, it will be useful to provide a brief introductory description of calliper bodies for disc brakes according to the prior art.

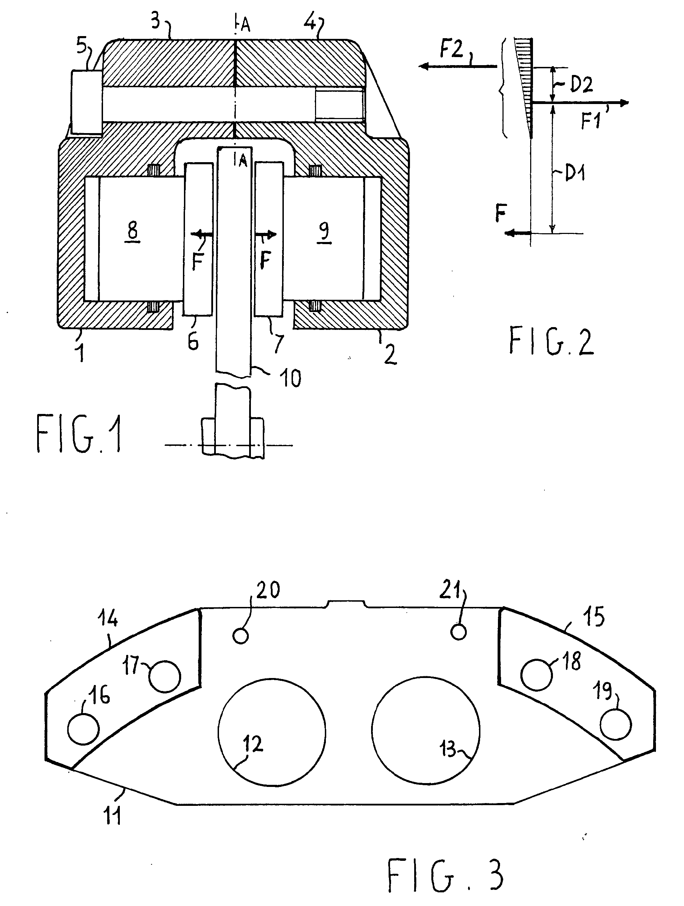

Figure 1 shows schematically a conventional calliper, in a section perpendicular to the plane of the brake disc.

This calliper consists of two half-callipers 1 and 2, formed by die-casting, juxtaposed at the positions of two yokes 3 and 4 (otherwise called "bridges"), and having flat contact surfaces. The yokes 3 and 4 are locked against each other by means of screws 5 housed in housings (some of which are threaded) formed suitably in the yokes 3 and 4.

Between the arms of the calliper there is inserted the brake disc 10, on which hydraulic pistons 8 and 9, housed in the arms of the calliper (or in only one of these, if the calliper is of the floating type), act with the interposition of pads 6 and 7.

Clearly, the yokes 3 and 4, in order not to interfere with the disc 10, must be positioned at the periphery of the disc 10, with a certain radial dimensions which is additional to that of the disc, while the hydraulic pistons must act on the peripheral rim of the disc surface.

When the hydraulic pistons 8 and 9 are operated and press the pads 6 and 7 against the disc 10, a force F is exerted on the two arms of the calliper, tending to spread them apart, and this must be opposed by an equivalent restraining reaction exerted in the section A-A between the two yokes 3 and 4. This reaction is represented in the qualitative diagram of Figure 2.

Evidently, the restraining reaction in the section A-A must be equivalent to a tensile force exerted between the yokes and a moment.

Since there is a physical discontinuity in the material of the opposing yokes in the section A-A, the only stress which can be exerted between the yokes is a compressive stress, while the tensile force can be opposed only by the screws 5.

Additionally, while the unit stress in the cross-section of the screws has a uniform distribution and can be represented by the resultant F1 centred on the axis of each screw, in order to ensure the continuity of the material subjected to elastic deformation and the flatness of the surface, the unit compressive stress on the contact surface between the yokes 3 and 4 must have a triangular distribution (as shown in Fig. 2), with a resultant F2 relatively close to F1 (distance D2) with respect to the distance D1 between the application straight line F1 and the line F.

For the moments to be in equilibrium, the following must be true:

$$F2 \times D2 = F \times D1$$

and consequently F2 must be much greater than F and the value of $|F1| = |F+F2|$ must be large.

The situation is aggravated by the fact that the elastic elongation of the screws 5 subjected to tension causes the development of a degree of play between the two yokes 3 and 4, which remain in contact only in the radially outermost part of the juxtaposed surfaces.

To avoid this problem, it is therefore necessary to pre-stress the screws in such a way as to impose a state of pre-compression on the yokes (as is done in precompressed reinforced concrete).

This causes a further increase in the stressing of the screws, which:

- can be only partially contained by increasing the thickness of the yokes in the radial direction, relative to the axis of the disc, so that D2 increases;

- requires suitable dimensioning of the screws, their housings, and the cross-section of the yokes, and

- finally, requires a considerable radial dimension of the yokes and the use of a considerable volume of material, with all the consequences in terms of weight and cost.

These considerations remain fundamentally valid, even in the case of brake disc callipers which extend over a relatively large sector of the disc, enclosing a considerable segment of the disc, as shown in Figure 3 which represents a front view of the side of a half-calliper of this type facing the brake disc.

As is clearly seen, the half-calliper consists of a body 11, formed by die-casting, in which one or more cylindrical chambers 12, 13, for housing the hydraulic pistons of the brake, are formed by machining.

The half-calliper is provided with two connecting yokes 14, 15, spaced apart from each other and generally in the shape of sectors of circular rims, having flat surfaces for connection to a second half-calliper which is similar to, and a mirror image of, that which is shown.

One of the two half-callipers is provided with lugs (not shown) for fixing the calliper body to fixed parts of the equipment on which the brake is to be fitted, this equipment being generally, but not necessarily, a vehicle.

In the case of floating callipers, only one of the opposing half-callipers is provided with a housing or housings 12, 13 for the hydraulic pistons, while the other forms a reaction support for the pad and is provided with means of fixing to fixed parts of the equipment with the interposition of joints which allow the whole calliper body to move perpendicularly to the plane of the brake disc.

The connecting yokes 14, 15 are provided with cylindrical housings 16, 17, 18, 19 (threaded in one of the two opposing half-callipers) for the insertion of locking screws.

It may be noted that the housings for the screws are conveniently placed as close as possible to the radially inner edge (with reference to the axis of the disc) of the contact surface of the yokes, to increase the resisting moment of the cross-section (in other words, increasing D2 as much as possible) while containing the tensile stress in the screws and the compressive stress in the yokes within acceptable limits.

In all cases, the radial dimension of the yokes is considerable. For example, for the brake callipers of a motor car of medium-high cubic capacity, the radial thickness of the yokes is of the order of 20-25 mm.

The void between the two yokes 14, 15 is conveniently used, when the calliper has been assembled, for easy replacement of the brake pads which are then retained in their housings by convenient locking devices, such as pins passing into the pads and into suitable housings 20 and 21 formed in the half-callipers by machining.

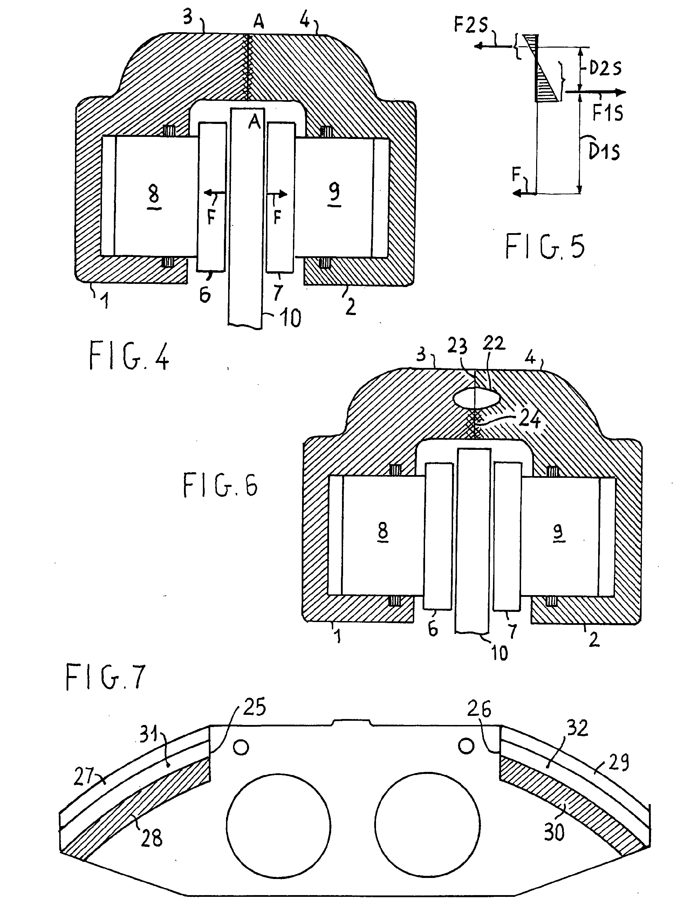

Figure 4 shows schematically in cross section, for comparison with Figure 1, a one-piece calliper made by welding two half-callipers, according to the present invention.

Equivalent structural details of the two callipers are identified by the same reference numbers and are not described further below.

The calliper of Figure 4 differs from that of Figure 1 only in the radial thickness of the yokes 3 and 4, which is conveniently reduced (by as much as 25%) and in the absence of locking screws and of the corresponding threaded housings formed in the yokes of the half-callipers.

The one-piece structure of the calliper body is obtained by welding together the yokes 3 and 4, by appropriate methods, along the contact surface A-A.

Thus tensile stresses can be exerted between the two yokes 3 and 4, in addition to compressive stresses.

When the hydraulic pistons 8 and 9 are operated, the force F which tends to spread the arms of the calliper apart subjects the material in the section A-A to unit tensile and compressive stresses distributed in the section according to a triangular diagram such as that shown in Figure 5, in which the tensile stresses are greater than the compressive stresses (giving as a resultant a moment plus a force equal and opposed to F) without causing the unit stresses to reach unacceptable values for the material, since the tensile force is distributed over a useful cross section which is much greater than that of the screws or bolts of a conventional calliper. This is true even if the radial thickness of the yokes is smaller than that of a conventional calliper having the same specifications.

Moreover, the resultant F1S of the unit tensile stresses is closer to the straight line of application of F than in the case shown in Figure 2 (in other words, D1S < D1), and the resultant F2S of the unit compressive stresses is farther from the straight line of application of F1S than in the case shown in Figure 2 (in other words, D2S > D2), so that both F1S and F2S are significantly smaller than the reactions F1, F2 developed in the case shown in Figure 2.

The diagram of Figure 5 also demonstrates two fundamental aspects.

The first is that, since only the radially inner part of the section (with reference to the axis of the disc) is subjected to tension, the weld can be limited to this part of the yokes only.

The second is that, since the radially median part of the section contributes to a negligible extent to the development of a moment and to the tensile resultant in the material, the yokes can conveniently be grooved, or hollowed, in their radially median parts, with consequent redistribution of the unit stresses in the cross section which makes them more uniform without an appreciable increase in the maximum stress.

This leads to a further saving of material (the groove can be produced by the die-casting) and a further reduction of the weight of the calliper, and, especially, makes the welding operation easier and more economical, as will be made clearer by the rest of the description.

Thus, in a variant embodiment, the one-piece body of the calliper according to the present invention can have the configuration shown in Figure 6, in which the common constructional details are identified by the same numerical references as those of Figure 4.

The one-piece calliper of Figure 6 differs from that of Figure 4 in the presence in the two yokes 3 and 4 of a toroidal groove 22, so that the contact surface between the two yokes 3 and 4 is reduced to two sectors of concentric circular rims 23 and 24 spaced apart radially by the cavity 22 interposed between them.

A further difference consists in the fact that, if necessary, the yokes can be welded together only at the inner circular sector 24, so that the welding operations are simplified and made easier and faster, particularly if methods are used in which the welding depth is a critical limiting factor.

These aspects are made even clearer by the sectional view, taken through the welding plane, of a calliper of this type, as shown in Figure 7.

Each half-calliper, like that of Figure 3, is provided with a pair of yokes 25 and 26, each having its surface for contact with the conjugate half-calliper divided into two sectors of concentric circular rims, indicated by 27 and 28 and by 29 and 30 respectively, separated by two interposed grooves 31 and 32 respectively.

Only the contact surfaces 28 and 30 are welded to the corresponding contact surfaces of the conjugate half-calliper.

A comparison between Figure 7 and Figure 3 gives an immediate indication of the considerable reduction of overall dimensions and weight of a one-piece calliper body, produced by welding, with respect to a conventional calliper body having similar specifications (in other words the same hydraulic head, the same size of the pistons and pads, and the same diameter of the brake disc).

This is of great importance in the case of brakes for motor vehicles, in which the radial dimension of the brakes is limited by the diameter of the rims of the wheels: a smaller radial dimension makes it possible to increase the diameter of the brake disc and provide greater braking efficiency.

The two half-callipers can be welded by using the various methods recently developed for welding light alloys of aluminium, silicon and magnesium, and even more suitable for use with different materials, such as cast iron, steel and composite materials in metal matrices.

All these methods have in common the fact that they do not require the use of filler material, and produce localized heating in a precise way, even with respect to the depth of the material, to cause localized fusion or plasticizing.

The welding therefore induces minimal internal stresses and does not cause significant deformations of the welded elements.

All these methods are particularly suitable (if not exclusive) for making continuous butt welds, even on materials of considerable thickness.

A first method is known as electron beam welding or EBW: a precisely focused electron beam is generated, consisting of electrons accelerated to very high velocities, up to as much as 66% of the speed of light.

The beam is directed on to the section to be welded and made to move parallel to it, causing it to be gradually fused and welded.

Since all the parameters of the electron beam (intensity, velocity, cross section) can be varied continuously and very rapidly, this method is extremely versatile and has the following characteristics:

- a very high precision of the welding depth, which can be regulated,
- a variable welding cross section,
- a high welding depth (up to > 200 mm),
- the absence of welding splashes or burrs,
- the possibility of introducing materials other than the base materials into the area of the weld line, to locally modify the mechanical characteristics.

The prerequisite of this method is the capacity to operate in a vacuum, to prevent the dispersion of the electron beam caused by impact of the electrons with the molecules of the atmosphere or of an inert gas.

This gives rise to considerable costs of equipment and operation.

A similar welding method which does not require operation in a vacuum is known as plasma welding: in this case, a beam of ions is generated, preferably ions of an inert gas such as argon, which, as in the case of the electrons, act as an energy carrier and therefore as a concentrated and controllable heat source.

In the current state of the art, this method, which is particularly efficient, with a high welding speed, while also being economical both in terms of equipment and in terms of operation, is only limited, by comparison with the EBW technology, in that the welding depth cannot exceed 12-15 mm with the commercially available equipment.

For the application according to the invention, this does not constitute a problem: even without using more powerful equipment for generating the plasma, the commercially available equipment can be used advantageously for making one-piece callipers of the type shown in Figures 6 and 7, with welding limited to the inner rim of the contact surface between the yokes of the half-callipers.

This does not exclude the possibility of carrying out a complete weld of the contact surfaces by two passes, one inner and one outer.

A third method which can be applied is what is called "stir friction welding", in which the localized heating with consequent plasticizing/fusion of the material is caused by the friction with a rotating pin which is sunk into the material and moved along the welding line.

The maximum welding depth obtainable in one pass is 15 mm, and this can be doubled by working on two opposite sides of the section to be welded.

With the aforementioned welding methods, it is possible to join to each other successfully even different materials. Thus, the one-piece callipers obtained in this way can be made by using materials with different mechanical characteristics for the two half-callipers: for example, a floating calliper body can be formed with the reaction side, which does not require particularly accurate machining, in a composite material with a metal matrix, while the half-calliper with the piston housings, the supply channels, and the threaded connectors for hydraulic connections and bleeding can be made from more easily machinable aluminium alloy.

Clearly, although the aforementioned welding methods are preferable, it is possible to use other methods, for example welding with filler metal in an inert atmosphere (MIG welding) or laser welding.

The method for fabricating a one-piece calliper body according to the present invention can be summarized as follows:

- firstly, two separate half-callipers, not necessarily of the same material, are produced by die-casting;
- the two separate half-callipers are machined, with removal of chips and grinding if necessary, to form the piston housings, the hydraulic connection channels, the contact and connection surfaces of the yokes, and also the reference or registration points for the precise positioning of the two half-callipers with respect to each other;
- the two half-callipers are then placed in juxtaposition with each other, with the surfaces to be welded in contact; and, finally,
- the two half-callipers are welded together, by butt welding along the flat contact surface, with a welding depth extending at least through the whole of the material juxtaposed at the contact surface which has to withstand tensile stresses.

As will be clear from the above description, the calliper body for disc brakes according to the invention makes it possible to produce a calliper for disc brakes which can overcome the problems mentioned with reference to the prior art brake callipers.

A further advantage of the calliper body for disc brakes according to the invention resides in the novel structural and operational simplicity of the calliper which is, moreover, economical to produce by comparison with the prior art callipers. This is because the calliper body is assembled without the need to carry out operations of boring and tapping the calliper bodies for screw connection means, and the costs of screw connection means are avoided. It should also be pointed out that the welding operation is unquestionably easier to automate than the operations of centring screw connection means.

Yet another advantage of the calliper body for disc brakes according to the invention resides in the fact that, in the case of callipers with internally formed channels for the passage of fluid between the two half-callipers, the weld joining the two half-callipers is in itself sufficient to provide the necessary tightness, without the use of seals.

Clearly, the above description relates to a preferred embodiment, and many variations may be made without departing from the scope of protection of the invention as defined by the following claims.

For example, contact surface along which the welding between the two half-callipers is carried out does not have to be flat and does not have to be contained in one plane. The two half-callipers can be shaped in such a way as to have complementary projections and recesses (of a stepped type, for example) designed to be joined in contact with each other. This solution is particularly suitable for the embodiment of the brake calliper shown in Figure 6.

Additionally, the contact surface along which the welding between the two half-calliper is carried out can be located in a plane inclined with respect to the plane of the disc brake.

**Claims**

1. Calliper body for disc brakes, comprising at least two die-cast half-callipers (1,2), with their details machined, characterized in that the said half-callipers (1,2) are joined together by welding.

2. Calliper body according to Claim 1, in which the said half-callipers (1,2) are butt-welded together along a contact surface.

3. Calliper body according to Claim 2, in which the said contact surface is flat.

4. Calliper body according to Claim 2, in which the said contact surface is parallel to that of the brake disc.

5. Calliper body according to Claim 1, in which the two half-callipers are made from different materials.

6. Calliper body according to Claim 5, in which the said calliper is of the floating type, with the reactive half-calliper made from composite material with a metal matrix and the active half-calliper made from aluminium alloy.

7. Calliper body according to Claim 2, in which the said contact surface comprises at least two sectors (23, 24) of concentric circular rims, spaced apart radially by a groove (22) and essentially in radial alignment.

8. Calliper body according to Claim 7, in which the said half-callipers are butt-welded together only in the sector of circular rim of smaller diameter.

9. Method for fabricating a one-piece calliper body for disc brakes, comprising the following steps:

   - forming two separate half-callipers by casting, and machining of the two half-callipers, forming on each of them a surface for the contact of the two half-callipers,
   - positioning the two half-callipers in juxtaposition with each other, with the said contact surfaces in contact with each other, and
   - butt-welding the said half-callipers together along the said contact surface.

10. Method according to Claim 9, in which the said welding is carried out by electron beam welding.

11. Method according to Claim 9, in which the said welding is carried out by plasma welding.

12. Method according to Claim 9, in which the said welding is carried out by stir friction welding.

FIG.1

FIG.2

FIG.3

FIG.4

FIG.5

FIG.6

FIG.7

**European Patent Office**

## EUROPEAN SEARCH REPORT

Application Number

EP 00 83 0066

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 017, no. 660 (M-1522), 7 December 1993 (1993-12-07) -& JP 05 215157 A (NISSIN KOGYO KK), 24 August 1993 (1993-08-24) | 1-5,9,10 | F16D55/22 |
| Y | * abstract * | 6,11,12 | |
| Y | DE 196 47 999 A (ITT AUTOMOTIVE EUROPE) 28 May 1998 (1998-05-28) | 6 | |
| A | * abstract; claims 1-3; figures 1,2 * * column 2, line 9 - line 43 * | 1,9 | |
| Y | EP 0 919 317 A (APUNEVICH ALEKSANDR I ;TITARENKO EVGENY IVANOVICH (RU)) 2 June 1999 (1999-06-02) * abstract * * column 1, line 5 - line 44 * | 11 | |
| Y | DE 40 20 669 A (ALFRED TEVES GMBH) 2 January 1992 (1992-01-02) | 12 | |
| A | * abstract; claims 1,6 * * column 1, line 3 - line 7 * * column 2, line 38 - line 43 * | 1,9 | TECHNICAL FIELDS SEARCHED (Int.Cl.7)<br><br>F16D |
| X | GB 2 131 507 A (ALFRED TEVES GMBH) 20 June 1984 (1984-06-20) * abstract; claims 1,4,12-16; figures 7,8 * * page 1, line 36 - line 51 * * page 1, line 109 - page 2, line 6 * * page 4, line 21 - line 70 * | 1-5,9,10 | |
| A | US 3 611 988 A (HESS WOLFGANG) 12 October 1971 (1971-10-12) * figure 4 * * column 4, line 34 - line 50 * | 1 | |

The present search report has been drawn up for all claims

| Place of search | Date of completion of the search | Examiner |
|---|---|---|
| THE HAGUE | 30 June 2000 | Westland, P |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 00 83 0066

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2000

| Patent document cited in search report | | Publication date | Patent family member(s) | | Publication date |
|---|---|---|---|---|---|
| JP 05215157 | A | 24-08-1993 | NONE | | |
| DE 19647999 | A | 28-05-1998 | NONE | | |
| EP 0919317 | A | 02-06-1999 | WO 9802270 | A | 22-01-1998 |
| DE 4020669 | A | 02-01-1992 | FR 2664005 | A | 03-01-1992 |
| | | | ZA 9104352 | A | 25-03-1992 |
| GB 2131507 | A | 20-06-1984 | DE 3245157 | A | 07-06-1984 |
| | | | FR 2537229 | A | 08-06-1984 |
| | | | IT 1194509 | B | 22-09-1988 |
| | | | JP 59113328 | A | 30-06-1984 |
| US 3611988 | A | 12-10-1971 | DE 1932492 | A | 12-02-1970 |
| | | | ES 368622 | A | 01-05-1971 |
| | | | FR 2316844 | A | 28-01-1977 |
| | | | GB 1272581 | A | 03-05-1972 |
| | | | JP 51003863 | B | 06-02-1976 |

EPO FORM P0459

For more details about this annex : see Official Journal of the European Patent Office, No. 12/82